# EUROPÄISCHE PATENTANMELDUNG

(11) **EP 2 762 512 A1**
(43) Veröffentlichungstag der Anmeldung: **06.08.2014**
(21) Anmeldenummer: 13153860.5
(22) Anmeldetag: 04.02.2013
(51) Int. Cl.: C08G 59/42, C08G 59/68, H01B 3/04, H01B 3/40

(54) **Reaktionsbeschleuniger für eine Copolymerisation, Elektroisolationsband, Elektroisolationskörper und Konsolidierungskörper**

(71) Anmelder: Siemens Aktiengesellschaft, 80333 München (DE)
(72) Erfinder: Brockschmidt, Mario, 46145 Oberhausen (DE); Pohlmann, Friedhelm, 45355 Essen (DE); Rainer, Frank, 46047 Oberhausen (DE)

(57) **Zusammenfassung**

Die Erfindung betrifft die Verwendung einer Verbindung mit der Strukturformel R¹CO₂⁻ R²CO₂ Zn²⁺ als Reaktionsbeschleuniger für die Copolymerisation einer Mischung eines Carbonsäureanhydrids und eines Oxirans, wobei R¹ und R² jeweils unabhängig voneinander eine geradkettige oder verzweigte Alkylgruppe sind.

## Beschreibung

Die Erfindung betrifft einen Reaktionsbeschleuniger für eine Copolymerisation, ein Elektroisolationsband mit dem Reaktionsbeschleuniger, einen Elektroisolationskörper mit dem Elektroisolationsband und einen Konsolidierungskörper mit dem Reaktionsbeschleuniger.

Elektrische Maschinen, wie z.B. Motoren und Generatoren, weisen elektrische Leiter, eine Hauptisolation und ein Ständerblechpaket auf. Die Hauptisolation hat den Zweck die Leiter gegeneinander, gegen das Ständerblechpaket und gegen die Umgebung elektrisch zu isolieren. Im Betrieb der elektrischen Maschine können sich durch elektrische Teilentladungen Funken bilden, die sog. "Treeing"-Kanäle in der Hauptisolation ausbilden können. Als Folge der "Treeing"-Kanäle kann es zu einem elektrischen Durchschlag durch die Hauptisolation kommen. Eine Barriere gegen die Teilentladungen wird durch den Einsatz von Glimmer in der Hauptisolation erreicht, welcher eine hohe Teilentladungsbeständigkeit hat. Der Glimmer wird in Form von plättchenförmigen Glimmerpartikeln mit einer herkömmlichen Partikelgröße von mehreren 100 Mikrometern bis zu mehreren Millimetern eingesetzt, wobei die Glimmerpartikel zu einem Glimmerpapier verarbeitet werden. Zur Erhöhung der Festigkeit und zur Verbesserung der Verarbeitbarkeit wird ein Elektroisolationsband verwendet, welches neben dem Glimmerpapier eine Trägerstruktur aufweist.

Zum Herstellen der Hauptisolation wird das Elektroisolationsband um den Leiter gewickelt und anschließend mit einem Kunstharz imprägniert. Das Kunstharz wird in Gegenwart eines Reaktionsbeschleunigers ausgehärtet, wobei herkömmlich Zink-Naphthenat, also Zinksalze einer Mischung von Cyclopentansäuren und Cyclohexansäuren, eingesetzt wird. Die Mischung fällt bei der Destillation von Rohöl innerhalb eines bestimmten Temperaturbereichs an, was dazu führen kann, dass ausgehend von verschiedenen Chargen des Rohöls auch die Mischung von Charge zu Charge verschieden zusammengesetzt sein kann. Dadurch kann ebenfalls das Härtungsverhalten des Kunstharzes von Charge zu Charge variieren. Daher ist es erforderlich, dass jede Charge des Zinknaphthenats aufwändig zubereitet wird, beispielsweise durch Einstellen seines pH-Wertes, seiner Säurezahl und seiner Viskosität.

Aufgabe der Erfindung ist es, einen Reaktionsbeschleuniger für eine Copolymerisation, ein Elektroisolationsband mit dem Reaktionsbeschleuniger, einen Elektroisolationskörper mit dem Elektroisolationsband und einen Konsolidierungskörper mit dem Reaktionsbeschleuniger zu schaffen, wobei der Reaktionsbeschleuniger in einer gleichbleibenden Qualität erhältlich ist.

Erfindungsgemäß wird eine Verbindung mit der Strukturformel R¹CO₂⁻ R²CO₂⁻ Zn²⁺ als Reaktionsbeschleuniger für die Copolymerisation einer Mischung eines Carbonsäureanhydrids und eines Oxirans verwendet, wobei R¹ und R² jeweils unabhängig voneinander eine geradkettige oder verzweigte Alkylgruppe sind. Das erfindungsgemäße Elektroisolationsband, bevorzugt ein Glimmer und/oder Aluminiumoxid aufweisendes Elektroisolationsband, weist eine Verbindung mit der Strukturformel R¹CO₂⁻ R²CO₂⁻ Zn²⁺ auf, wobei R¹ und R² jeweils eine geradkettige oder verzweigte Alkylgruppe sind. Der erfindungsgemäße Elektroisolationskörper für einen elektrischen Leiter weist das erfindungsgemäße Elektroisolationsband auf, wobei die Mischung des Carbonsäureanhydrids und des Oxirans in Gegenwart der Verbindung mit der Strukturformel R¹CO₂⁻ R²CO₂⁻ Zn²⁺ ausgehärtet ist, wobei R¹ und R² jeweils eine geradkettige oder verzweigte Alkylgruppe sind.

Der erfindungsgemäße Konsolidierungskörper für einen Wickelkopf einer rotierenden elektrischen Maschine weist einen porösen und elektrisch nichtleitenden Grundkörper auf, der eine Verbindung mit der Strukturformel R¹CO₂⁻ R²CO₂⁻ Zn²⁺ aufweist und von einer Mischung eines Carbonsäureanhydrids und einem Oxiran durchtränkt ist, die in Gegenwart der Verbindung mit der Strukturformel R¹CO₂⁻ R²CO₂⁻ Zn²⁺ ausgehärtet ist, wobei R¹ und R² jeweils eine geradkettige oder verzweigte Alkylgruppe sind.

Die Verbindung mit der Strukturformel R¹CO₂⁻ R²CO₂⁻ Zn²⁺ ist vorteilhaft mit einer gleichbleibenden Qualität kommerziell erhältlich und/oder mit der gleichbleibenden Qualität herstellbar. Somit ist vorteilhaft sichergestellt, dass durch die Verwendung der Verbindung als Reaktionsbeschleuniger die Copolymerisation der Mischung von Charge zu Charge im Wesentlichen gleich verläuft. Ferner hat das Elektroisolationsband, welches die Verbindung aufweist, durch die gleichbleibende Qualität der Verbindung jeweils ein gleichbleibendes Imprägnierverhalten, wodurch vorteilhaft das Elektroisolationsband in gleichbleibender Qualität von der Mischung durchtränkt werden kann. Durch die gleich verlaufende Copolymerisation und die gleichbleibende Durchtränkung des Elektroisolationsbandes können vorteilhaft der Elektroisolationskörper und der Konsolidierungskörper mit einer gleichbleibenden Qualität hergestellt werden.

Der Elektroisolationskörper kann beispielsweise als eine Hauptisolation für einen elektrischen Generator vorgesehen werden. Denkbar ist auch, dass die Hauptisolation im Bereich der Wickelköpfe des elektrischen Generators vorgesehen wird. Wird Aluminiumoxid anstelle oder neben dem Glimmer verwendet, so ergibt sich eine höhere Wärmeleitfähigkeit der Hauptisolation, wodurch die Temperatur der Hauptisolation gering gehalten werden kann und somit ihre Lebensdauer vorteilhaft lang ist.

Vorzugsweise sind R¹ und R² jeweils unabhängig voneinander C₆alkyl, C₇alkyl, C₈alkyl, C₉alkyl oder C₁₀alkyl. Überraschenderweise kann das Elektroisolationsband, welches den Reaktionsbeschleuniger mit diesen Alkylgruppen aufweist, schneller und gleichmäßiger von der Mischung durchtränkt werden als es mit dem Zinknaphthenat der Fall ist, wodurch sich vorteilhaft nach dem Aushärten der Mischung aus dem Carbonsäureanhydrid und dem Oxiran ein homogener Elektroisolationskörper ausbildet. Gleiches gilt für den Konsolidierungskörper.

R¹ und R² sind bevorzugt jeweils unabhängig voneinander n-heptyl, 1-methyl-n-hexyl, 2-methyl-n-hexyl, 3-methyl-n-hexyl, 4-methyl-n-hexyl, 5-methyl-n-hexyl, 3-ethyl-n-pentyl, 2-ethyl-n-pentyl, 1-ethyl-n-pentyl, 1,1-dimethyl-n-pentyl, 2,2-dimethyl-n-pentyl, 3,3-dimethyl-n-pentyl, 4,4-dimethyl-n-pentyl, 1,2-dimethyl-n-pentyl, 1,3-dimethyl-n-pentyl, 1,4-dimethyl-n-pentyl, 2,3-dimethyl-n-pentyl, 2,4-dimethyl-n-pentyl, 3,4-dimethyl-n-pentyl, 1,1,2-trimethyl-n-butyl, 1,1,3-trimethyl-n-butyl, 1,2,3-trimethyl-n-butyl, 1,2,2-trimethyl-n-butyl, 2,2,3-trimethyl-n-butyl, 2,3,3-trimethyl-n-butyl, 1,3,3-trimethyl-n-butyl, 1-ethyl-1-methyl-n-butyl, 1-ethyl-2-methyl-n-butyl, 1-ethyl-3-methyl-n-butyl, 2-ethyl-1-methyl-n-butyl, 2-ethyl-2-methyl-n-butyl, 2-ethyl-3-methyl-n-butyl, 1-isopropyl-n-butyl, 2-isopropyl-n-butyl, 1,1,2,2-tetramethyl-n-propyl, 1,1-diethyl-n-propyl, 2,2-dimethyl-1-ethyl-n-propyl, 1,2-dimethyl-1-ethyl-n-propyl, 1-isopropyl-1-methyl-n-propyl oder 1-isopropyl-2-methyl-n-propyl oder
neononyl, bevorzugt eine tertiäre C₉alkyl-Gruppe, besonders bevorzugt 1,1-dimethyl-n-heptyl, 1,1,2-trimethyl-n-hexyl, 1,1,3-trimethyl-n-hexyl, 1,1,4-trimethyl-n-hexyl, 1,1,5-trimethyl-n-hexyl, 1-ethyl-1-methyl-n-hexyl, 1,2-dimethyl-1-ethyl-n-pentyl, 1,3-dimethyl-1-ethyl-n-pentyl, 1,4-dimethyl-1-ethyl-n-pentyl, 1,1-dimethyl-2-ethyl-n-pentyl, 1,1-dimethyl-3-ethyl-n-pentyl, 1,1,2,2-tetramethyl-n-pentyl, 1,1,2,3-tetramethyl-n-pentyl, 1,1,2,4-tetramethyl-n-pentyl, 1,1,3,3-tetramethyl-n-pentyl, 1,1,3,4-tetramethyl-n-pentyl, 1,1,4,4-tetramethyl-n-pentyl, 1,1-diethyl-n-pentyl, 1-methyl-1-n-propyl-n-pentyl, 1-methyl-1-isopropyl-n-pentyl, 1,1,2,2,3-pentamethyl-n-butyl, 1,1,2,3,3-pentamethyl-n-butyl, 1-ethyl-1,2,2-trimethyl-n-butyl, 1-ethyl-1,2,3-trimethyl-n-butyl, 1-ethyl-1,3,3-trimethyl-n-butyl, 2-ethyl-1,1,2-trimethyl-n-butyl, 2-ethyl-1,1,3-trimethyl-n-butyl, 1,2-dimethyl-1-n-propyl-n-butyl, 1,3-dimethyl-1-n-propyl-n-butyl, 1-ethyl-1-n-propyl-n-butyl, 1,2-dimethyl-1-isopropyl-n-butyl, 1,3-dimethyl-1-isopropyl-n-butyl, 1-ethyl-1-isopropyl-n-butyl, 1,1-diethyl-2-methyl-n-butyl, 1,1-diethyl-3-methyl-n-butyl, 1,2-diethyl-1-methyl-n-butyl, 1-methyl-1-tert-butyl-n-butyl, 1,1-diethyl-2,2-dimethyl-n-propyl, 1-isopropyl-1,2,2-trimethyl-n-propyl, 1,1-diisopropyl-n-propyl oder
6,6-dimethyl-n-heptyl.

Unter diese Verbindungen fallen beispielsweise Zinkoctanoat und Zinkneodecanoat, die beispielsweise bei OMG Borchers, Deutschland, unter den Handelsnamen Borchikat 15, Borchikat 22, Soligen Zink 11/12, Octa-Soligen-Zink 22 in einem im Vergleich zu Zink-Naphthenat hohem Reinheitsgrad kommerziell erhältlich sind.

Das Carbonsäureanhydrid ist bevorzugt ein zyklisches Carbonsäureanhydrid, insbesondere Phthalsäureanhydrid, Methylhexahydrophthalsäureanhydrid und/oder Hexahydrophthalsäureanhydrid. Das Oxiran ist bevorzugt ein Bisoxiran, insbesondere Bisphenol-A-diglycidylether und/oder Bisphenol-F-diglycidylether. Es ist bevorzugt, dass die Mischung aus dem Carbonsäureanhydrid und dem Oxiran einen Reaktivverdünner, insbesondere Styrol, vorzugsweise mit einem Massenanteil von 0% bis ungefähr 60% bezogen auf die Mischung, aufweist. Besonders bevorzugt ist ungefähr 3% bis ungefähr 10% Styrol. Der Reaktivverdünner erniedrigt vorteilhaft zur besseren Durchtränkbarkeit des Elektroisolationsbandes und/oder des Konsolidierungskörpers die Viskosität der Mischung und wird in der Copolymerisation mit umgesetzt.

Das Elektroisolationsband ist bevorzugt von einer Mischung eines Carbonsäureanhydrids und eines Oxirans durchtränkt.

Vorzugsweise weist der Elektroisolationskörper teilentladungsbeständige nanoskalige Partikel auf, bevorzugt mit einem Massenanteil der Partikel von 2% bis 10% bezogen auf die Mischung aus dem Carbonsäureanhydrid, dem Oxiran und den Partikeln. Dadurch nimmt die Teilentladungsbeständigkeit des Elektroisolationskörpers zu, wodurch vorteilhaft seine Lebensdauer länger wird. Es ist bevorzugt, dass die Partikel anorganische Partikel sind, insbesondere Partikel die Siliziumdioxid, Titandioxid und/oder Aluminiumoxid aufweisen. Bevorzugtermaßen liegt der mittlere Partikeldurchmesser der Partikel zwischen 1 nm und 50 nm. Zur Herstellung des Elektroisolationskörpers werden die Partikel vor dem Durchtränken des Elektroisolationsbandes zu der Mischung aus dem Carbonsäureanhydrid und dem Oxiran hinzu gegeben. Durch eine Silanisierung der Oberflächen der Partikel durch ein Umsetzen der Partikel mit Alkylalkoxysilanen, insbesondere Methyltrimethoxysilan, Dimethyldimethoxysilan und/oder Trimethylmethoxysilan, kann die Oberfläche der Partikel organophiliert werden, so dass die Partikel vorteilhaft besser mit der Mischung aus dem Carbonsäureanhydrid und dem Oxiran mischbar sind, ohne dass es zu einer unerwünschten Agglomeration der Partikel kommt. Jedoch beschleunigen die Partikel in der Mischung die Copolymerisation ebenfalls. Bei einer Anwesenheit von Nanopartikeln in der Mischung ist es für eine homogene Ausbildung des Elektroisolationskörpers unerlässlich den Reaktionsbeschleuniger in dem Elektroisolationsband vorzusehen.

Bevorzugtermaßen weist das Elektroisolationsband eine poröse und elektrisch nichtleitende Trägerstruktur auf, insbesondere einen Strick, ein Vlies, einen Schaum, insbesondere einen offenporigen Schaum, einen Glasstrick, einen Glasroving, ein Gewebe und/oder eine Harzmatte. Die Porosität der Trägerstruktur ist dabei derart, dass sie von der Mischung durchtränkbar ist. Die Trägerstruktur weist bevorzugt ein Polyester, insbesondere Dacron, und/oder Polyethylenterephthalat (PET), auf. Die Trägerstruktur ist bevorzugtermaßen mit einem Isolationspapier, insbesondere ein Glimmer und/oder Aluminiumoxid aufweisendes Isolationspapier, verklebt. Das Isolationspapier hat bevorzugt eine derartige Porosität, dass es von der Mischung durchtränkbar ist.

Der Grundkörper des Konsolidierungskörpers weist bevorzugt einen Strick, einen Vlies, einen Schaum, insbesondere einen offenporigen Schaum, einen Glasstrick, einen Glasroving, ein Gewebe und/oder eine Harzmatte auf. Bevorzugt ist der Konsolidierungskörper im Bereich des Wickelkopfs einer elektrischen Maschine, insbesondere eines Motors oder eines Generators, und zwischen den elektrischen Leitern des Wickelkopfes vorgesehen. Vorzugsweise ist der Konsolidierungskörper derart im Bereich des Wickelkopfes angeordnet, dass er eine Versteifung des Wickelkopfes bewirkt, so dass der Wickelkopf unempfindlicher gegenüber einer Schwingungsanregung im Betrieb der elektrischen Maschine wird und somit eine lange Lebensdauer hat. Bei der Herstellung des Konsolidierungskörpers kann er gleichzeitig mit dem Elektroisolationskörper von der Mischung aus dem Carbonsäureanhydrid und dem Oxiran durchtränkt werden. Bevorzugt weist der Grundkörper des Konsolidierungskörpers ein Polyester, insbesondere Dacron, und/oder Polyethylenterephthalat (PET) auf.

Anhand von vier Beispielen wird im Folgenden die Erfindung näher erläutert.

In einem ersten Beispiel wird der Elektroisolationskörper wie folgt hergestellt: Ein poröses und damit imprägnierbares Glimmerpapier aufweisendes Elektroisolationsband wird mit einer Lösung aus Zinkneodecanoat in einem Lösemittel, insbesondere Naphtha, durchtränkt. Alternativ zum Durchtränken ist ein Aufwalzen, Sprühen, Tauchen, Träufeln, ein Point-to-Point Verfahren und/oder ein Kiss-Coating Verfahren möglich. Anschließend wird das Lösemittel aus dem Elektroisolationsband entfernt, insbesondere durch eine Zufuhr von Wärme und/oder durch Vakuumtrocknen. Das Elektroisolationsband wird um einen elektrischen Leiter gewickelt. Der bevorzugt so umwickelte elektrische Leiter wird in ein Bad, welches eine stöchiometrische Mischung aus Bisphenol-A-diglycidylether und Hexahydrophthalsäureanhydrid aufweist, eingebracht. Das Elektroisolationsband und Hohlräume zwischen einzelnen Wicklungen des Elektroisolationsbandes werden in dem Bad in einem VPI-Prozess (englisch: Vacuum Pressure Impregnation, Vakuum-Druck-Imprägnier) von der Mischung unter Anlegen eines Vakuums durchtränkt. Anschließend wird die Mischung in dem VPI-Prozess durch eine Druckbeaufschlagung ausgehärtet und damit der Elektroisolationskörper fertiggestellt.

In einem zweiten Beispiel wird der Elektroisolationskörper wie folgt hergestellt: Ein poröses Glimmerpapier wird mittels eines Klebers mit einer porösen Harzmatte aus PET verklebt und somit ein Elektroisolationsband hergestellt. Eine Lösung von Zink-n-octanoat in Naphtha wird auf das Elektroisolationsband gesprüht, und anschließend wird das Naphtha mittels Vakuumtrocknen aus dem Elektroisolationsband entfernt. Das Elektroisolationsband wird um einen elektrischen Leiter gewickelt und der so umwickelte elektrische Leiter wird in ein Bad, welches eine stöchiometrische Mischung aus Bisphenol-F-diglycidylether und Methylhexahydrophthalsäureanhydrid aufweist, eingebracht. Zur Verringerung der Viskosität der Mischung weist die Mischung ebenfalls 10 Massenprozent Styrol bezogen auf die Mischung auf. Das Elektroisolationsband und Hohlräume zwischen einzelnen Wicklungen des Elektroisolationsbandes werden in dem Bad in einem VPI-Prozess von der Mischung unter Anlegen eines Vakuums durchtränkt. Anschließend wird die Mischung in dem VPI-Prozess durch eine Druckbeaufschlagung ausgehärtet und damit der Elektroisolationskörper fertiggestellt.

In einem dritten Beispiel wird der Elektroisolationskörper wie folgt hergestellt: Ein poröses Glimmerpapier wird mittels eines Klebers mit einem Glasstrick verklebt und somit ein Elektroisolationsband hergestellt. Das Elektroisolationsband wird mit einer Lösung von Zink-n-octanoat in Naphtha durchtränkt, und anschließend wird das Naphtha aus dem Elektroisolationsband durch eine Wärmezufuhr entfernt. Das Elektroisolationsband wird um einen elektrischen Leiter gewickelt, und der so umwickelte elektrische Leiter wird in ein Bad, welches eine stöchiometrische Mischung aus Bisphenol-F-diglycidylether und Methylhexahydrophthalsäureanhydrid aufweist, eingebracht. Die Mischung weist ebenfalls Partikel aus Titandioxid mit einem mittleren Partikeldurchmesser von 50 nm und einem Anteil von 3 Massenprozent bezogen auf die Mischung auf. Zur Verringerung der Viskosität der Mischung weist die Mischung außerdem 10 Massenprozent Styrol bezogen auf die Mischung auf. Das Elektroisolationsband und Hohlräume zwischen einzelnen Wicklungen des Elektroisolationsbandes werden in dem Bad in einem VPI-Prozess von der Mischung unter Anlegen eines Vakuums durchtränkt. Anschließend wird die Mischung in dem VPI-Prozess durch eine Druckbeaufschlagung ausgehärtet und damit der Elektroisolationskörper fertiggestellt.

In einem vierten Beispiel wird der Konsolidierungskörper wie folgt hergestellt: Ein poröses und damit imprägnierbares Gewebe aus PET wird mit einer Lösung aus Zinkneodecanoat in einem Lösemittel, insbesondere Naphtha, durchtränkt. Anschließend wird das Lösemittel aus dem Gewebe durch Vakuumtrocknen entfernt. Das Gewebe wird anschließend um einen Wickelkopf einer elektrischen Maschine gewickelt. Die elektrische Maschine wird mit dem Wickelkopf in ein Bad, welches eine stöchiometrische Mischung aus Bisphenol-A-diglycidylether und Hexahydrophthalsäureanhydrid aufweist, eingebracht. Das Gewebe wird in dem Bad in einem VPI-Prozess von der Mischung unter Anlegen eines Vakuums durchtränkt. Anschließend wird die Mischung in dem VPI-Prozess durch eine Druckbeaufschlagung ausgehärtet und damit der Konsolidierungskörper fertiggestellt. Der so fertiggestellte Konsolidierungskörper bewirkt eine Versteifung des Wickelkopfes, so dass dieser weniger zu Schwingungen beim Betrieb der elektrischen Maschine neigt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verwendung einer Verbindung mit der Strukturformel R¹CO₂⁻ R²CP₂⁻ Zn²⁺ als Reaktionsbeschleuniger für die Copolymerisation einer Mischung eines Carbonsäureanhydrids und eines Oxirans,
wobei R¹ und R² jeweils unabhängig voneinander eine geradkettige oder verzweigte Alkylgruppe sind.

2. Verwendung gemäß Anspruch 1,
wobei R¹ und R² jeweils unabhängig voneinander C₆alkyl, C₇alkyl, C₈alkyl, C₉alkyl oder C₁₀alkyl sind.

3. Verwendung gemäß Anspruch 1 oder 2,
wobei R¹ und R² jeweils unabhängig voneinander n-heptyl, 1-methyl-n-hexyl, 2-methyl-n-hexyl, 3-methyl-n-hexyl, 4-methyl-n-hexyl, 5-methyl-n-hexyl, 3-ethyl-n-pentyl, 2-ethyl-n-pentyl, 1-ethyl-n-pentyl, 1,1-dimethyl-n-pentyl, 2,2-dimethyl-n-pentyl, 3,3-dimethyl-n-pentyl, 4,4-dimethyl-n-pentyl, 1,2-dimethyl-n-pentyl, 1,3-dimethyl-n-pentyl, 1,4-dimethyl-n-pentyl, 2,3-dimethyl-n-pentyl, 2,4-dimethyl-n-pentyl, 3,4-dimethyl-n-pentyl, 1,1,2-trimethyl-n-butyl, 1,1,3-trimethyl-n-butyl, 1,2,3-trimethyl-n-butyl, 1,2,2-trimethyl-n-butyl, 2,2,3-trimethyl-n-butyl, 2,3,3-trimethyl-n-butyl, 1,3,3-trimethyl-n-butyl, 1-ethyl-1-methyl-n-butyl, 1-ethyl-2-methyl-n-butyl, 1-ethyl-3-methyl-n-butyl, 2-ethyl-1-methyl-n-butyl, 2-ethyl-2-methyl-n-butyl, 2-ethyl-3-methyl-n-butyl, 1-isopropyl-n-butyl, 2-isopropyl-n-butyl, 1,1,2,2-tetramethyl-n-propyl, 1,1-diethyl-n-propyl, 2,2-dimethyl-1-ethyl-n-propyl, 1,2-dimethyl-1-ethyl-n-propyl, 1-isopropyl-1-methyl-n-propyl oder 1-isopropyl-2-methyl-n-propyl oder
neononyl, bevorzugt eine tertiäre C₉alkyl-Gruppe, besonders bevorzugt 1,1-dimethyl-n-heptyl, 1,1,2-trimethyl-n-hexyl, 1,1,3-trimethyl-n-hexyl, 1,1,4-trimethyl-n-hexyl, 1,1,5-trimethyl-n-hexyl, 1-ethyl-1-methyl-n-hexyl, 1,2-dimethyl-1-ethyl-n-pentyl, 1,3-dimethyl-1-ethyl-n-pentyl, 1,4-dimethyl-1-ethyl-n-pentyl, 1,1-dimethyl-2-ethyl-n-pentyl, 1,1-dimethyl-3-ethyl-n-pentyl, 1,1,2,2-tetramethyl-n-pentyl, 1,1,2,3-tetramethyl-n-pentyl, 1,1,2,4-tetramethyl-n-pentyl, 1,1,3,3-tetramethyl-n-pentyl, 1,1,3,4-tetramethyl-n-pentyl, 1,1,4,4-tetramethyl-n-pentyl, 1,1-diethyl-n-pentyl, 1-methyl-1-n-propyl-n-pentyl, 1-methyl-1-isopropyl-n-pentyl, 1,1,2,2,3-pentamethyl-n-butyl, 1,1,2,3,3-pentamethyl-n-butyl, 1-ethyl-1,2,2-trimethyl-n-butyl, 1-ethyl-1,2,3-trimethyl-n-butyl, 1-ethyl-1,3,3-trimethyl-n-butyl, 2-ethyl-1,1,2-trimethyl-n-butyl, 2-ethyl-1,1,3-trimethyl-n-butyl, 1,2-dimethyl-1-n-propyl-n-butyl, 1,3-dimethyl-1-n-propyl-n-butyl, 1-ethyl-1-n-propyl-n-butyl, 1,2-dimethyl-1-isopropyl-n-butyl, 1,3-dimethyl-1-isopropyl-n-butyl, 1-ethyl-1-isopropyl-n-butyl, 1,1-diethyl-2-methyl-n-butyl, 1,1-diethyl-3-methyl-n-butyl, 1,2-diethyl-1-methyl-n-butyl, 1-methyl-1-tert-butyl-n-butyl, 1,1-diethyl-2,2-dimethyl-n-propyl, 1-isopropyl-1,2,2-trimethyl-n-propyl, 1,1-diisopropyl-n-propyl, oder
6,6-dimethyl-n-heptyl sind.

4. Verwendung gemäß einem der Ansprüche 1 bis 3,
wobei das Carbonsäureanhydrid ein cyclisches Carbonsäureanhydrid ist,
insbesondere Phthalsäureanhydrid, Methylhexahydrophthalsäureanhydrid und/oder Hexahydrophthalsäureanhydrid.

5. Verwendung gemäß einem der Ansprüche 1 bis 4,
wobei das Oxiran ein Bisoxiran ist,
insbesondere Bisphenol-A-diglycidylether und/oder Bisphenol-F-diglycidylether.

6. Verwendung gemäß einem der Ansprüche 1 bis 5,
wobei die Mischung aus dem Carbonsäureanhydrid und dem Oxiran einen Reaktivverdünner, insbesondere Styrol, vorzugsweise mit einem Massenanteil von 0% bis ungefähr 60%, weiter bevorzugt ungefähr 3% bis ungefähr 10%, bezogen auf die Mischung, aufweist.

7. Elektroisolationsband,
bevorzugt ein Glimmer und/oder Aluminiumoxid aufweisendes Elektroisolationsband, das eine Verbindung mit der Strukturformel R¹CO₂⁻ R²CO₂⁻ Zn²⁺ aufweist,
wobei R¹ und R² jeweils eine geradkettige oder verzweigte Alkylgruppe sind.

8. Elektroisolationsband gemäß Anspruch 7,
wobei das Elektroisolationsband von einer Mischung eines Carbonsäureanhydrids und einem Oxiran durchtränkt ist.

9. Elektroisolationskörper für einen elektrischen Leiter,
wobei der Elektroisolationskörper ein Elektroisolationsband gemäß Anspruch 8 aufweist,
wobei die Mischung des Carbonsäureanhydrids und des Oxirans in Gegenwart der Verbindung mit der Strukturformel R¹CO₂⁻ R²CO₂⁻ Zn²⁺ ausgehärtet ist,
wobei R¹ und R² jeweils eine geradkettige oder verzweigte Alkylgruppe sind.

10. Elektroisolationskörper gemäß Anspruch 9,
wobei der Elektroisolationskörper teilentladungsbeständige nanoskalige Partikel aufweist,
bevorzugt mit einem Massenanteil der Partikel von 2% bis 10% bezogen auf die Mischung aus dem Carbonsäureanhydrid, dem Oxiran und den Partikeln.

11. Konsolidierungskörper für einen Wickelkopf einer rotierenden elektrischen Maschine,
wobei der Konsolidierungskörper einen porösen und elektrisch nichtleitenden Grundkörper aufweist, der eine Verbindung mit der Strukturformel R¹CO₂⁻ R²CO₂⁻ 2n²⁺ aufweist und von einer Mischung eines Carbonsäureanhydrids und einem Oxiran durchtränkt ist, die in Gegenwart der Verbindung mit der Strukturformel R¹CO₂⁻ R²CO₂⁻ Zn²⁺ ausgehärtet ist,
wobei R¹ und R² jeweils eine geradkettige oder verzweigte Alkylgruppe sind.
